# EUROPEAN PATENT SPECIFICATION

(11) **EP 3 484 649 B1**
(45) Date of publication and mention of the grant of the patent: **20.09.2023**
(21) Application number: 17729309.9
(22) Date of filing: 30.05.2017
(51) Int. Cl.: B23K 9/095, B23K 9/10, B23K 9/32, H04W 4/00, G06F 1/16, H04B 1/3827

(54) **WEARABLE TECHNOLOGY FOR INTERFACING WITH WELDING EQUIPMENT AND MONITORING EQUIPMENT USING WIRELESS TECHNOLOGIES**
TRAGBARE TECHNOLOGIE ZUR SCHNITTSTELLENBILDUNG MIT EINER SCHWEISSAUSRÜSTUNG UND ÜBERWACHUNGSVORRICHTUNG MIT DRAHTLOSEN TECHNOLOGIEN
TECHNOLOGIE VESTIMENTAIRE POUR FAIRE INTERFACE AVEC UN ÉQUIPEMENT DE SOUDAGE ET ÉQUIPEMENT DE SURVEILLANCE UTILISANT DES TECHNOLOGIES SANS FIL

(30) Priority: 12.07.2016 US 201615207935
(43) Date of publication of application: 22.05.2019
(73) Proprietor: Illinois Tool Works, Inc., Glenview, Illinois 60025 (US)
(72) Inventor: KOWALESKI, Anthony Joseph, Glenview, Illinois 60025 (US)
(74) Representative: Meissner Bolte Partnerschaft mbB
(86) International application number: PCT/US2017/035007
(87) International publication number: WO 2018/013240

(56) References cited:
- WO-A2-2005/084867
- US-A1- 2014 051 358
- US-A1- 2014 121 557
- US-A1- 2016 041 680
- US-A1- 2016 089 751

## Description

### BACKGROUND

Welding is a process that has increasingly become ubiquitous in all industries. While such processes may be automated in certain contexts, a large number of applications continue to exist for manual welding operations, the success of which relies heavily on the proper use of a welding gun or torch by a welding operator. For instance, improper torch angle, contact-tip-to-work-distance, travel speed, and improper welding power source setup are parameters that may dictate the quality of a weld. Even experienced welding operators, however, often have difficulty monitoring and maintaining these important parameters throughout the welding processes. Interface devices which are configured to be worn by a user, or to be integrated into an article of clothing or equipment worn by the user, during the welding operation as shown in the preamble of claim 1 (see, for example WO 2005/084867 A2) already exists and enables an improved interfacing with welding and monitoring equipment.

### BRIEF SUMMARY

An interface device is provided for wearable technology for interfacing with welding equipment and monitoring equipment using wireless technologies, substantially as illustrated by and/or described in connection with at least one of the figures, as set forth more completely in the claims.

### BRIEF DESCRIPTION OF THE DRAWINGS

FIG. 1 shows an example arc welding system.
FIG. 2 shows example welding equipment.
FIG. 3 shows example welding headwear.
FIG. 4 shows example circuitry of the headwear of FIG. 3.
FIGs. 5A-5C illustrate various parameters which may be determined from images of a weld in progress.
FIG. 6A shows an example wearable interface device for wirelessly interfacing with welding and monitoring equipment.
FIG. 6B shows an example user interface of a wearable interface device.
FIG. 7 shows an example interface device integrated into welding headwear for wirelessly interfacing with welding and monitoring equipment.
FIG. 8 shows an example ultra-thin wearable interface device that may be applied directly into body or clothing of an operator for wirelessly interfacing with welding and monitoring equipment, in accordance with the present invention.
FIG. 9 shows example circuitry of an interface device for wirelessly interfacing with welding and monitoring equipment, in accordance with the present invention.
FIG. 10 is a flowchart illustrating an example process for interfacing with welding and/or monitoring equipment using wearable or integrated interface devices.

### DETAILED DESCRIPTION

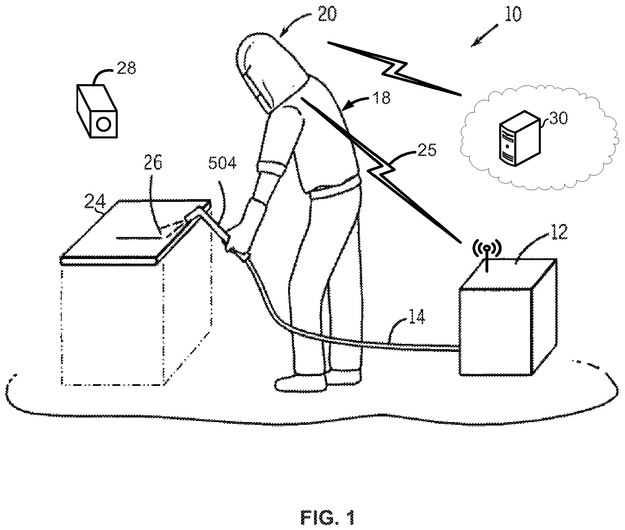

FIG. 1 shows an example arc welding system. Referring to FIG. 1, there is shown an example welding system 10 in which an operator 18 is wearing welding headwear 20 and welding a workpiece 24 using a torch 504 to which power is delivered by equipment 12 via a conduit 14, with monitoring equipment 28 being available for use to monitor welding operations. The equipment 12 may comprise a power source, optionally a source of an inert shield gas and, where wire/filler material is to be provided automatically, a wire feeder.

The welding system 10 of FIG. 1 may be configured to form a weld joint 512 by any known technique, including electric welding techniques such shielded metal arc welding (i.e., stick welding), metal inert gas welding (MIG), tungsten inert gas welding (TIG), and resistance welding.

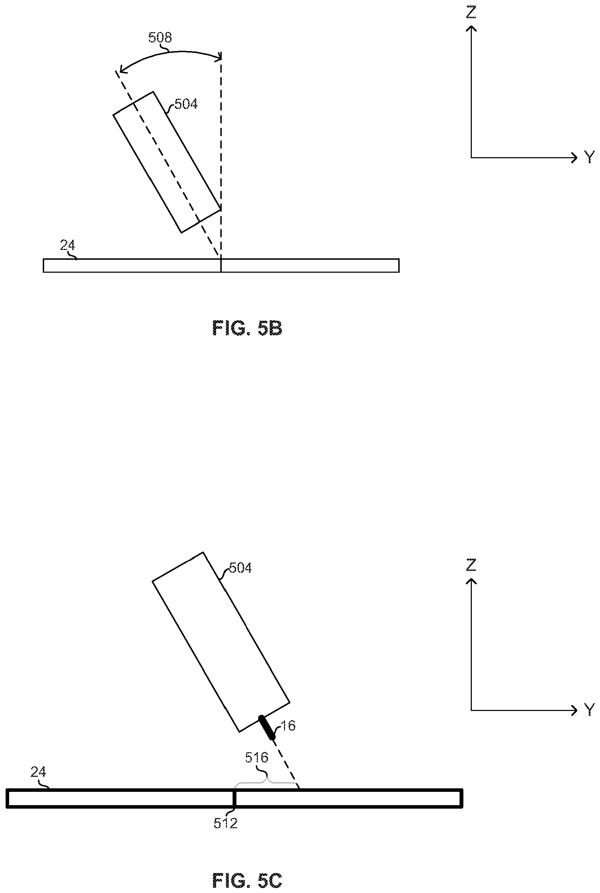

Optionally, the welding equipment 12 may be arc welding equipment that provides a direct current (DC) or alternating current (AC) to a consumable or non-consumable electrode 16 (better shown, for example, in FIG. 5C) of a torch 504. The electrode 16 delivers the current to the point of welding on the workpiece 24. In the welding system 10, the operator 18 controls the location and operation of the electrode 16 by manipulating the torch 504 and triggering the starting and stopping of the current flow. When current is flowing, an arc 26 is developed between the electrode and the workpiece 24. The conduit 14 and the electrode 16 thus deliver current and voltage sufficient to create the electric arc 26 between the electrode 16 and the workpiece. The arc 26 locally melts the workpiece 24 and welding wire or rod supplied to the weld joint 512 (the electrode 16 in the case of a consumable electrode or a separate wire or rod in the case of a non-consumable electrode) at the point of welding between electrode 16 and the workpiece 24, thereby forming a weld joint 512 when the metal cools.

Optionally, the monitoring equipment 28 may be used to monitor welding operations. The monitoring equipment 28 may be used to monitor various aspects of welding operations, particularly in real-time (that is as welding is taking place). For example, the monitoring equipment 28 may be operable to monitor arc characteristics such as length, current, voltage, frequency, variation, and instability. Data obtained from the monitoring may be used (e.g., by the operator 18 and/or by an automated quality control system) to ensure proper welding.

As shown, and described more fully below, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

In some instances, the user (e.g., operator 18) may need to interface with equipment used in welding operations and/or in monitoring of welding operations. For example, the operator 18 may need to interface with the equipment 12 (e.g., to control or adjust settings of the equipment), or with the monitoring equipment 28 (e.g., to obtain real-time monitoring information, to control or adjusting monitoring settings, etc.).

Solutions in accordance with the present disclosure enable interfacing with welding and/or monitoring equipment in a manner that allows utilizing small interface devices that use wireless technologies to facilitate the interactions needed for interfacing with the welding/monitoring equipment (thus obviating the need for wired connections), and allowing for interfacing without requiring specialized welding equipment (e.g., special torches) or stand-along interface equipment. In this regard, special torches may not be, however, well received by customers who have standardized on a specific torch for consumables. Also, the addition of extra controls on the special torches may makes these tools larger, and thus harder to wield and use (e.g., harder to fit into tight spaces). Further, stand-along interface equipment typically take up valuable weld cell space, and the wiring needed therefor can cause some issues, e.g., having an extra cord in the cell creates problems such as trip hazards and can break with normal wear and tear. Interface devices implemented in accordance with the present disclosure, however, are small enough that they are wearable or integrate-able, e.g., small enough that these devices can be worn by the user (e.g., on the belt, on the arm, etc.) or be integrated into equipment or clothing that users directly uses or wears during welding operations (e.g., welding helmets). Further, these devices may be particularly configured to support and use wireless technologies (e.g., WiFi, Bluetooth, NFC, etc.), such that when the welding equipment and/or monitoring equipment are also capable of wireless connectivity (or may be coupled to wireless communication devices), the interfacing may be done wirelessly, thus avoiding use of cords or other forms of wired connectors that would otherwise create safety hazards.

In an example use scenario, once the small interface device is worn by operator 18 (on the belt, or on the arm band, etc.) or is integrated into the welding helmet 20, the interface device may search for and connect to the welding and/or monitoring equipment via wireless connections (e.g., WiFi or Bluetooth). Once connected, the interface device may be used in interfacing with the welding and/or monitoring equipment, particularly in conjunction with welding operations. For example, the interface device may be used by the operator to adjust settings of welding equipment (e.g., adjust weld settings such as voltage or trim, wire feed speed or amperage, and inductance or arc control), to adjust settings of monitoring equipment (e.g., modifying monitoring setting, such as monitoring angle, etc.), and to provide instructions to monitoring equipment (e.g., request feedback from previous weld, send monitoring request for next weld, instruct to ignore monitoring, etc.).

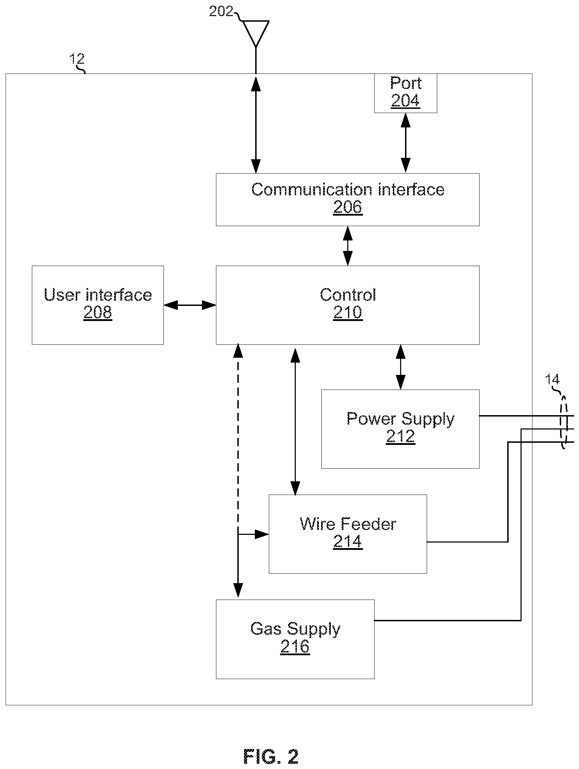

FIG. 2 shows example welding equipment. The equipment 12 of FIG. 2 comprises an antenna 202, a communication port 204, communication interface circuitry 206, user interface module 208, control circuitry 210, power supply circuitry 212, wire feeder module 214, and gas supply module 216.

The antenna 202 may be any type of antenna suited for the frequencies, power levels, etc. used by the communication link 25.

The communication port 204 may comprise, for example, an Ethernet over twisted pair port, a USB port, an HDMI port, a passive optical network (PON) port, and/or any other suitable port for interfacing with a wired or optical cable.

The communication interface circuitry 206 is operable to interface the control circuitry 210 to the antenna 202 and/or port 204 for transmit and receive operations. For transmit, the communication interface 206 may receive data from the control circuitry 210 and packetize the data and convert the data to physical layer signals in accordance with protocols in use on the communication link 25. For receive, the communication interface may receive physical layer signals via the antenna 202 or port 204, recover data from the received physical layer signals (demodulate, decode, etc.), and provide the data to control circuitry 210.

The user interface module 208 may comprise electromechanical interface components (e.g., screen, speakers, microphone, buttons, touchscreen, etc.) and associated drive circuitry. The user interface 208 may generate electrical signals in response to user input (e.g., screen touches, button presses, voice commands, etc.). Driver circuitry of the user interface module 208 may condition (e.g., amplify, digitize, etc.) the signals and them to the control circuitry 210. The user interface 208 may generate audible, visual, and/or tactile output (e.g., via speakers, a display, and/or motors/actuators/servos/etc.) in response to signals from the control circuitry 210.

The control circuitry 210 comprises circuitry (e.g., a microcontroller and memory) operable to process data from the communication interface 206, the user interface 208, the power supply 212, the wire feeder 214, and/or the gas supply 216; and to output data and/or control signals to the communication interface 206, the user interface 208, the power supply 212, the wire feeder 214, and/or the gas supply 216.

The power supply circuitry 212 comprises circuitry for generating power to be delivered to a welding electrode via conduit 14. The power supply circuitry 212 may comprise, for example, one or more voltage regulators, current regulators, inverters, and/or the like. The voltage and/or current output by the power supply circuitry 212 may be controlled by a control signal from the control circuitry 210. The power supply circuitry 212 may also comprise circuitry for reporting the present current and/or voltage to the control circuitry 210. In an example implementation, the power supply circuitry 212 may comprise circuitry for measuring the voltage and/or current on the conduit 14 (at either or both ends of the conduit 14) such that reported voltage and/or current is actual and not simply an expected value based on calibration.

The wire feeder module 214 is configured to deliver a consumable wire electrode 16 to the weld joint 512. The wire feeder 214 may comprise, for example, a spool for holding the wire, an actuator for pulling wire off the spool to deliver to the weld joint 512, and circuitry for controlling the rate at which the actuator delivers the wire. The actuator may be controlled based on a control signal from the control circuitry 210. The wire feeder module 214 may also comprise circuitry for reporting the present wire speed and/or amount of wire remaining to the control circuitry 210. In an example implementation, the wire feeder module 214 may comprise circuitry and/or mechanical components for measuring the wire speed, such that reported speed is actual and not simply an expected value based on calibration.

The gas supply module 216 is configured to provide shielding gas via conduit 14 for use during the welding process. The gas supply module 216 may comprise an electrically controlled valve for controlling the rate of gas flow. The valve may be controlled by a control signal from control circuitry 210 (which may be routed through the wire feeder 214 or come directly from the control 210 as indicated by the dashed line). The gas supply module 216 may also comprise circuitry for reporting the present gas flow rate to the control circuitry 210. In an example implementation, the gas supply module 216 may comprise circuitry and/or mechanical components for measuring the gas flow rate such that reported flow rate is actual and not simply an expected value based on calibration.

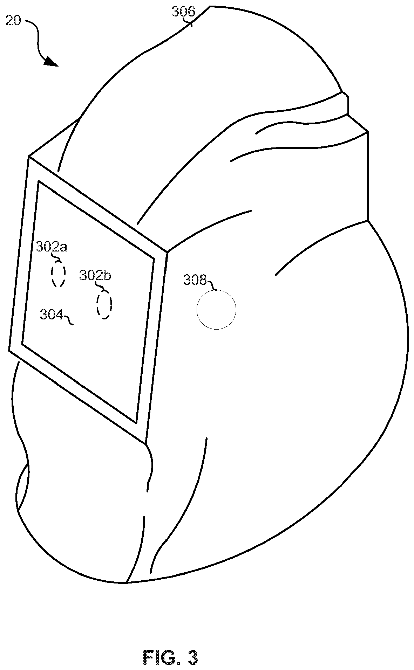

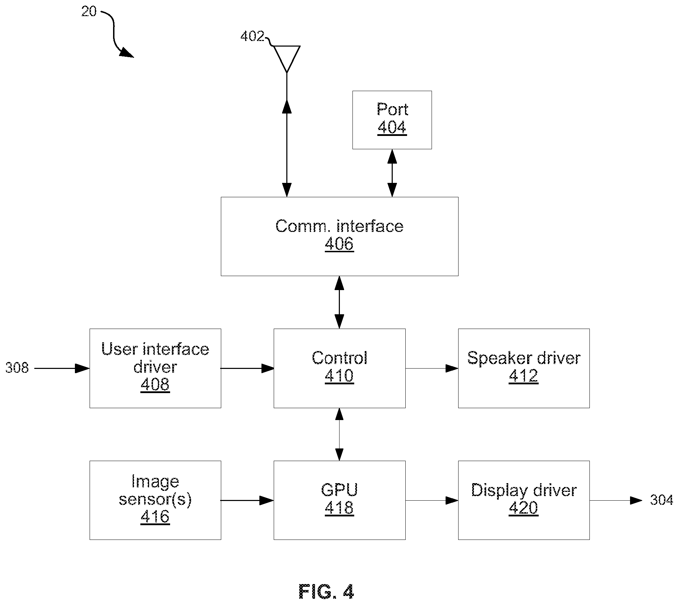

FIGs. 3 and 4 show example welding headwear. The example headwear 20 is a helmet comprising a shell 306 in or to which are mounted: one or more cameras comprising optical components 302 and image sensor(s) 416, a display 304, electromechanical user interface components 308, an antenna 402, a communication port 404, a communication interface 406, user interface driver circuitry 408, a central processing unit (CPU) 410, speaker driver circuitry 412, graphics processing unit (GPU) 418, and display driver circuitry 420. The headwear also may be a functional welding mask or goggles, for example, so it can be used either for actual welding or for simulated welding with minimal changeover.

Each set of optics 302 may comprise, for example, one or more lenses, filters, and/or other optical components for capturing electromagnetic waves in the spectrum ranging from, for example, infrared to ultraviolet. In an example implementation, optics 302a and 302b for two cameras may be positioned approximately centered with the eyes of a wearer of the helmet 20 to capture stereoscopic images (at any suitable frame rate ranging from still photos to video at 30 fps, 100 fps, or higher) of the field of view that a wearer of the helmet 20 would have if looking through a lens.

The display 304 may comprise, for example, a LCD, LED, OLED, E-ink, and/or any other suitable type of display operable to convert electrical signals into optical signals viewable by a wearer of the helmet 20.

The electromechanical user interface components 308 may comprise, for example, one or more touchscreen elements, speakers, microphones, physical buttons, etc. that generate electric signals in response to user input. For example, electromechanical user interface components 308 may comprise capacity, inductive, or resistive touchscreen sensors mounted on the back of the display 304 (i.e., on the outside of the helmet 20) that enable a wearer of the helmet 20 to interact with user interface elements displayed on the front of the display 304 (i.e., on the inside of the helmet 20).

The antenna 402 may be any type of antenna suited for the frequencies, power levels, etc. used by the communication link 25.

The communication port 404 may comprise, for example, an Ethernet over twisted pair port, a USB port, an HDMI port, a passive optical network (PON) port, and/or any other suitable port for interfacing with a wired or optical cable.

The communication interface circuitry 406 is operable to interface the control circuitry 410 to the antenna 202 and port 204 for transmit and receive operations. For transmit, the communication interface 406 may receive data from the control circuitry 410 and packetize the data and convert the data to physical layer signals in accordance with protocols in use on the communication link 25. The data to be transmitted may comprise, for example, control signals for controlling the equipment 12. For receive, the communication interface may receive physical layer signals via the antenna 202 or port 204, recover data from the received physical layer signals (demodulate, decode, etc.), and provide the data to control circuitry 410. The received data may comprise, for example, indications of present settings and/or actual measured output of the equipment 12 (e.g., voltage, amperage, and/or wire speed settings and/or measurements).

The user interface driver circuitry 408 is operable to condition (e.g., amplify, digitize, etc.) signals from the user interface component(s) 308.

The control circuitry 410 is operable to process data from the communication interface 406, the user interface driver 408, and the GPU 418, and to generate control and/or data signals to be output to the speaker driver circuitry 412, the GPU 418, and the communication interface 406. Signals output to the communication interface 406 may comprise, for example, signals to control settings of equipment 12. Such signals may be generated based on signals from the GPU 418 and/or the user interface driver 408. Signals from the communication interface 406 may comprise, for example, indications (received via link 25) of present settings and/or actual measured output of the equipment 12. Signals to the GPU 418 may comprise, for example, signals to control graphical elements of a user interface presented on display 304. Signals from the GPU 418 may comprise, for example, information determined based on analysis of pixel data captured by images sensors 416.

The speaker driver circuitry 412 is operable to condition (e.g., convert to analog, amplify, etc.) signals from the control circuitry 410 for output to one or more speakers of the user interface components 308. Such signals may, for example, carry audio to alert a wearer of the helmet 20 that a welding parameter is out of tolerance, to provide audio instructions to the wearer of the helmet 20, etc.

The image sensor(s) 416 may comprise, for example, CMOS or CCD image sensors operable to convert optical signals to digital pixel data and output the pixel data to GPU 418.

The graphics processing unit (GPU) 418 is operable to receive and process pixel data (e.g., of stereoscopic or two-dimensional images) from the image sensor(s) 416, to output one or more signals to the control circuitry 410, and to output pixel data to the display 304.

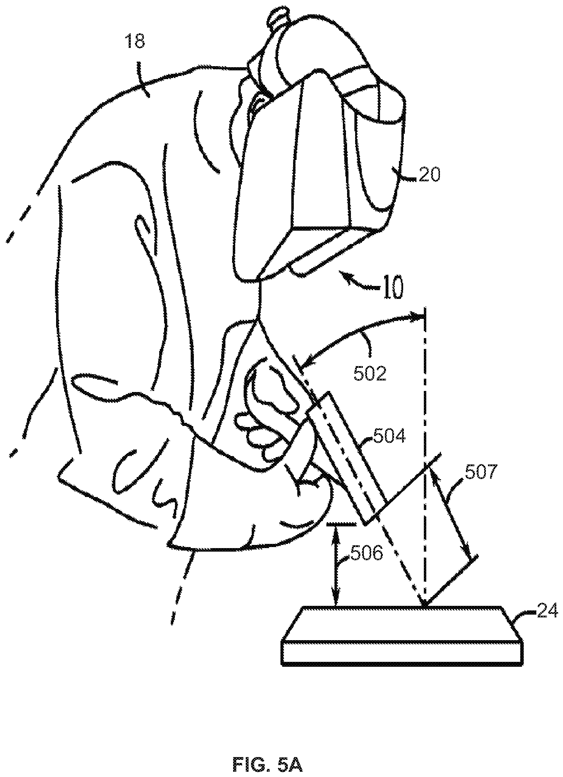

The processing of pixel data by the GPU 418 may comprise, for example, analyzing the pixel data to determine, in real time (e.g., with latency less than 100ms or, more preferably, less than 20ms), one or more of the following: name, size, part number, type of metal, or other characteristics of the workpiece 24; name, size, part number, type of metal, or other characteristics of the electrode 16 and/or filler material; type or geometry of joint 512 to be welded; 2-D or 3-D positions of items (e.g., electrode, workpiece, etc.) in the captured field of view, one or more weld parameters (e.g., such as those described below with reference to FIG. 5) for an in-progress weld in the field of view; measurements of one or more items in the field of view (e.g., size of a joint or workpiece being welded, size of a bead formed during the weld, size of a weld puddle formed during the weld, and/or the like); and/or any other information which may be gleaned from the pixel data and which may be helpful in achieving a better weld, training the operator, calibrating the system 10, etc.

The information output from the GPU 418 to the control circuitry 410 may comprise the information determined from the pixel analysis.

The pixel data output from the GPU 418 to the display 304 may provide a mediated reality view for the wearer of the helmet 20. In such a view, the wearer experiences the video presented on the display 304 as if s/he is looking through a lens, but with the image enhanced and/or supplemented by an on-screen display. The enhancements (e.g., adjust contrast, brightness, saturation, sharpness, etc.) may enable the wearer of the helmet 20 to see things s/he could not see with simply a lens. The on-screen display may comprise text, graphics, etc. overlaid on the video to provide visualizations of equipment settings received from the control circuit 410 and/or visualizations of information determined from the analysis of the pixel data.

The display driver circuitry 420 is operable to generate control signals (e.g., bias and timing signals) for the display 304 and to condition (e.g., level control synchronize, packetize, format, etc.) pixel data from the GPU 418 for conveyance to the display 304.

FIGs. 5A-5C illustrate various parameters which may be determined from images of a weld in progress. Coordinate axes are shown for reference. In FIG. 5A the Z axis points to the top of the paper, the X axis points to the right, and the Y axis points into the paper. In FIGs. 5B and 5C, the Z axis points to the top of the paper, the Y axis points to the right, and the X axis points into the paper.

In FIGs. 5A-5C, the equipment 12 comprises a MIG gun 504 that feeds a consumable electrode 16 to a weld joint 512 of the workpiece 24. During the welding operation, a position of the MIG gun 504 may be defined by parameters including: contact-tip-to-work distance 506 or 507, a travel angle 502, a work angle 508, a travel speed 510, and aim.

Contact-tip-to-work distance may include the vertical distance 506 from a tip of the torch 504 to the workpiece 24 as illustrated in FIG. 5A. In other configurations, the contact-tip-to-work distance may be the distance 507 from the tip of the torch 504 to the workpiece 24 at the angle of the torch 504 to the workpiece 24).

The travel angle 502 is the angle of the gun 504 and/or electrode 16 along the axis of travel (X axis in the example shown in FIGs. 5A-5C).

The work angle 508 is the angle of the gun 504 and/or electrode 16 perpendicular to the axis of travel (Y axis in the example shown in FIGs. 5A-5C).

The travel speed is the speed at which the gun 504 and/or electrode 16 moves along the joint 512 being welded.

The aim is a measure of the position of the electrode 16 with respect to the joint 512 to be welded. Aim may be measured, for example, as distance from the center of the joint 512 in a direction perpendicular to the direction of travel. FIG. 5C, for example, depicts an example aim measurement 516.

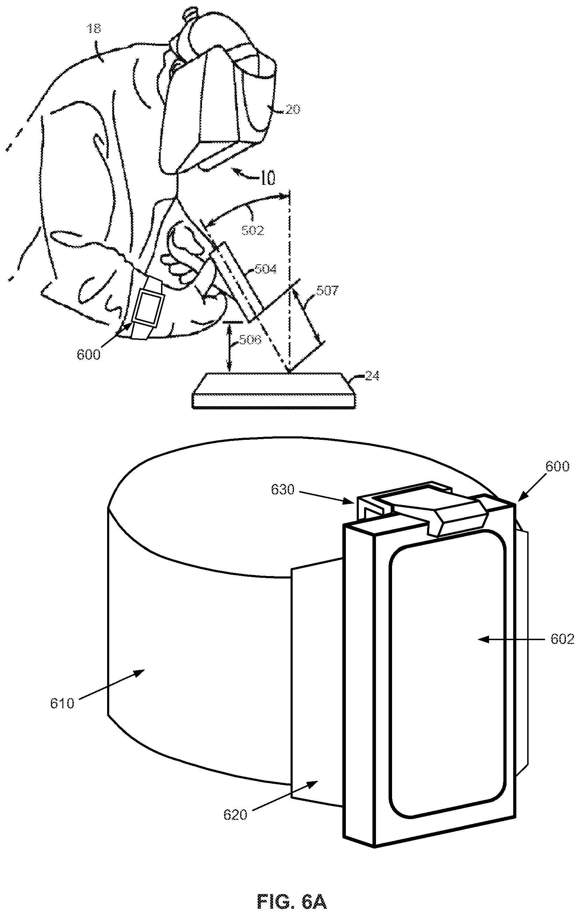

FIG. 6A shows an example wearable interface device for wirelessly interfacing with welding and monitoring equipment. Referring to FIG. 6A, there is shown an interface device 600 that is worn by the operator 18 during welding operations.

The interface device 600 may comprise suitable circuitry for enabling interfacing with equipment used in welding operations and/or monitoring of welding operations. In particular, the interface device 600 may be configured to allow performing such interfacing wirelessly, and without necessitating that the operator 18 move away or substantially adjust the position that is otherwise taken while performing the welding. In this regard, the interface device 600 may be operable to connect to the welding and/or monitoring equipment wirelessly, e.g., by setting up and using connections based on suitable wireless technologies, such as WiFi, Bluetooth, NFC, and the like.

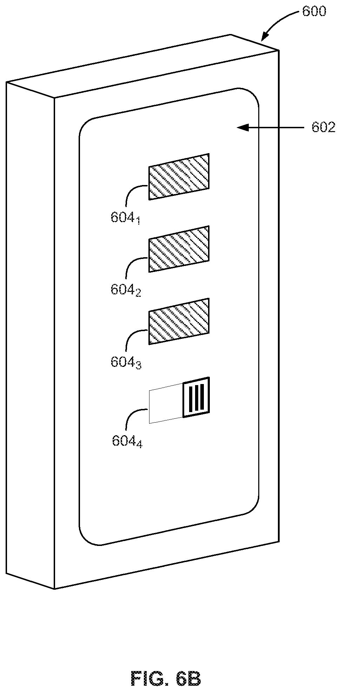

Further, the interface device 600 may be operable to receive user input, which may then be communicated, using the wireless connection(s), to the welding and/or monitoring equipment. For example, the interface device 600 may comprise a user interface 602, which may be used by the operator to provide input (e.g., selection, instructions, etc.), which may then be processed by the interface device 600 to facilitate interfacing with the welding and/or monitoring equipment. This may include, for example, generating signals for transmission over the particular wireless connection(s) that are set up, and converting the user input to data that maybe embedded into these signals. Various means or techniques for obtaining user input may be used. The user interface 602 may comprise a physical or virtual keypad or keyboard for example. An example user interface is described in more detail with respect to FIG. 6B.

The interface device 600 may be operable to concurrently interface with multiple pieces of equipment, which may include both welding and monitoring equipment. For example, in instances where the interface device 600 finds and connects to multiple pieces of equipment, comprising both welding and monitoring equipment, the interface device 600 may be operable to interface with and control, independently and at the same time, each one of the welding or monitoring equipment. The interface device 600 may support, for example, a plurality of operation modes, each of which being particularly configured or defined for interfacing with particular type of equipment or particular type of interactions (e.g., 'welding' mode, 'monitoring' mode, etc.), to ensure that suitable interfacing messages are generated for each equipment based on the corresponding mode. Thus, whenever the interface device 600 finds and connects to a piece of equipment, the interface device 600 may be configured to operate in one of the available operation modes suitable to interface with that piece equipment. For example, the interface device 600 may be configured to operate in 'welding' mode when interfacing with welding equipment, and to concurrently operate in 'monitoring' mode when interfacing with weld monitoring equipment.

In the example implementation depicted in FIG. 6A, the interface device 600 may be configured for use in an arm band arrangement. In this regard, the interface device 600 may be mounted onto a device holder 620, to which it may be secured using suitable securing means 630 (e.g., clip). The device holder 620 may be attached to a band 610 (e.g., wrist band), which may allow the operator 18 to wear the interface device 600 on his/her arm (as shown in the top part of FIG. 6A).

Nonetheless, other approaches (and corresponding arrangements) may be used for wearing interface devices by users, or integrating them into clothing or equipment used or worn by the operators.

The interface device 600 may be a dedicated device that is designed and implemented specifically for use in interfacing with welding and/or monitoring equipment. In some example implementations, however, devices which may not be specifically designed or made as "interface devices" may be nonetheless configured for use as such. In this regard, devices having capabilities and/or characteristics that may be necessary for functioning as interface devices, in the manner described herein, may be used, for example. In particular, devices that have suitable communicative capabilities (e.g., supporting wireless technologies such as WiFi, Bluetooth, NFC, or the like), support user interactions (e.g., having suitable input/output means, such as keypads, buttons, textual interface, touchscreens, etc.), and/or are sufficiently small and/or light to be conveniently worn by the operator and/or integrated into the operator's clothing or equipment may be used. For example, devices such as smartphones, smartwatches, etc. may be used as "interface devices." In this regard, the interfacing functions may be implemented in software (e.g., applications), which may run or be executed by existing hardware components of these devices.

In some implementations, the user interface 602 may support use of multi-function input (or output) elements. For example, an input element in the user interface 602 may have different functions based on, e.g., whether it is interfacing with welding equipment or monitoring equipment. Thus, the same type of action by the user with such multi-function input element (e.g., pressing a multi-function 'button') may trigger sending different messages based on whether the equipment is welding or monitoring equipment, based on whether the interface device 600 in in 'welding' or 'monitoring' mode, etc.

FIG. 6B shows an example user interface of a wearable interface device. Referring to FIG. 6B, there is shown the interface device 600, which comprises user interface 602 for inputting user's selections or instructions.

The user interface 602 may comprise suitable hardware, software, and/or any combination thereof for enabling user input (including, e.g., selections, instructions, etc.), which may be then communicated to welding and/or monitoring equipment. In an example implementation, the user interface 602 may be configured for operation based on user interactions with the user interface 602. For example, the user interface 602 may comprise buttons, dials, slides, etc. which the user (e.g., operator 18) may use to input selections or instructions by physical actions (e.g., tapping, pressing, sliding, etc.) The means for facilitating the user interactions (e.g., buttons, etc.) may be physical elements (e.g., physical, spring-operated buttons), logical (e.g., virtual button on touchscreen), or a combination thereof. Nonetheless, the user interface is not so limited, and other types of interfaces and/or functions for use therein may be used, e.g., gyroscopes, accelerometers, cameras, microphone, etc.

In the particular example implementation shown in FIG. 6B, the user interface 602 may comprise a plurality of buttons 604, of which four buttons 604₁ - 604₄ are shown. Each of these buttons may be configured to support one or more particular type of input. For example, 604₄ may be a "selector" switch (e.g., sliding between two positions, right and left), which allows the operator to switch between two main types of inputs: adjusting weld parameters and selecting arc data monitoring functions. The button 604₁ may be a "push" button that controls incrementing welding equipment settings if selector switch 604₄ is in the "weld" position or selects previous welds if selector switch 604₄ is in the "monitor" position. The button 604₂ may be a "push" button that controls decrementing welding equipment settings if selector switch 604₄ is in the "weld" position or selects next weld if selector switch 604₄ is in the "monitor" position. The button 604₂ may be a "push" button that controls weld parameter selection (e.g., voltage, wire feed speed, inductance, etc.) if selector switch 604₄ is in the "weld" position or selects ignore weld if selector switch 604₄ is in the "monitor" position.

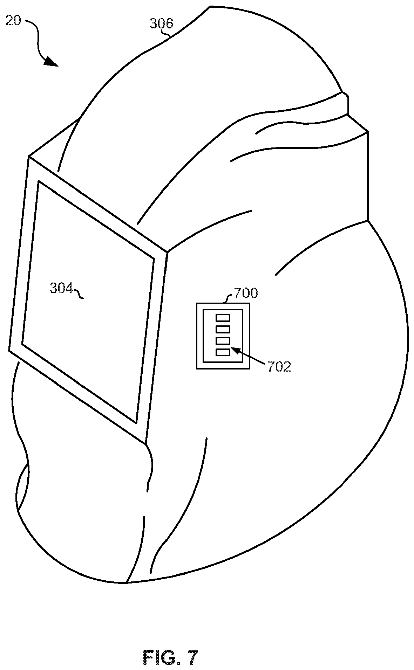

FIG. 7 shows an example interface device integrated into welding headwear for wirelessly interfacing with welding and monitoring equipment. Referring to FIG. 7, there is shown an interface device 700.

The interface device 700 may be similar to the interface device 600 of FIGs. 6A and 6B, and accordingly may operate and/or be used in substantially similar manner. In this regard, the interface device 700 may also comprise a user interface 702, which may be similar to the user interface 602 of the interface device 600, and may be used in substantially the same manner. The interface device 700, however, may be configured such that it may be integrated into the equipment and/or clothing worn by the user. For example, as shown in FIG. 7, the interface device may be integrated into the welding headwear (e.g., helmet) 20, such as on the side of the welding helmet 20. Accordingly, the user (operator 18) may interface with welding and/or monitoring equipment in convenient manner, e.g., by simply by moving his/her hand to the side/outside of the helmet, where the interface device 700, and then using his/her fingers to interact with the user interface 702, such as by tapping, pressing, or sliding buttons (which may be physical or logical) to input instructions, such as adjusting settings, which would then be transmitted wirelessly to the welding equipment and/or the monitoring equipment.

While the integrated interface device 700 is shown as a dedicated device that is integrated on the side of the helmet, the disclosure is not so limited, and other techniques for providing integrated interfacing capabilities and/or the necessary functions (e.g., processing, wireless communication, etc.) may be used, with suitable corresponding device implementations. For example, in one implementation, the welding helmet 20 may incorporate eye tracking based interfacing function (e.g., using suitable sensors integrated into the display 304, and necessary associated circuitry). Such sensors may be used to obtain user input, which may be provided based on pre-defined manner (e.g., blinking of eye(s), and various counts of eye blinks representing different inputs). Thus, eye blinks may be counted, and used as selections and inputs, with corresponding signals being then generated and communicated wirelessly (e.g., via wireless transceiver incorporated into the welding helmet 20) to the welding and/or monitoring equipment.

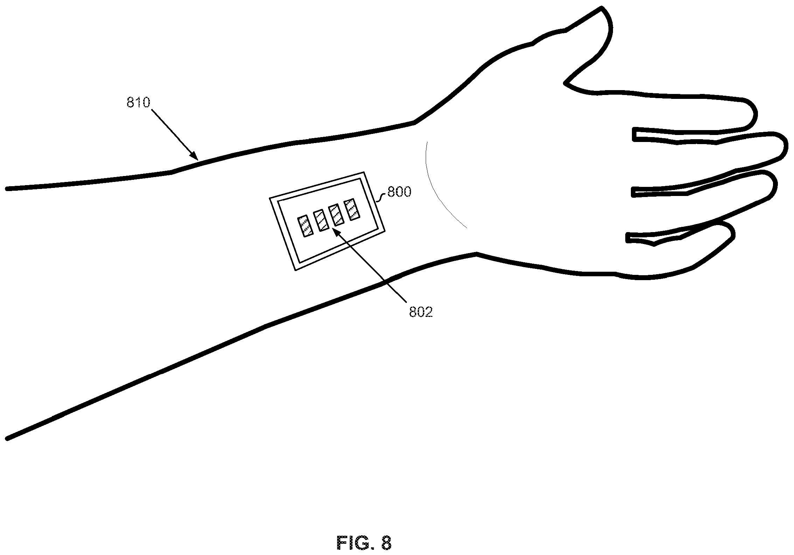

FIG. 8 shows an example ultra-thin wearable interface device according to the present invention that may be applied directly into body or clothing of an operator for wirelessly interfacing with welding and monitoring equipment, in accordance with aspects of this disclosure. Referring to FIG. 8, there is shown an interface device 800.

The interface device 800 may be similar to the interface devices 600 and 700 of FIGs. 6A, 6B, and 7, and accordingly may operate and/or be used in substantially similar manner. In this regard, the interface device 800 also comprises a user interface 802, which may be similar to the user interface 602 of the interface device 600 and/or the user interface 702 of the interface device 700, and/or may be used in substantially the same manner. According to the present invention, the interface device 800, however, is configured as an ultra-thin wearable element that can be applied directly to the body (or part thereof, such as arm) of the user and/or to particular equipment or clothing used or worn by the user. In this regard, the interface device 800 is designed and/or configured as flexible and ultra-thin element, such that when applied to the user, it conforms to the shape surface where it is applied, and accomodates changes in that surface (e.g., changes resulting from the user's arm's movement when applied onto the user's arm) and continue functioning. According to the present invention, the interface device 800 is implemented as a stick-on and peel-off (or wash-off) patch, comprising a flexible membrane, of suitable composition, with built-in circuitry for supporting the required functions of interface device 800 (e.g., communication, input/output (I/O), processing, etc.). Thus, the interface device 800 enables the interfacing operations described above with very minimal (if any) impact on the movement of the user and/or very minimal added weight.

For example, as shown in FIG. 8, the interface device 800 is applied directly to the arm 810 (at the inside of the forearm) of the user (operator 18). Accordingly, the user interfaces with welding and/or monitoring equipment in convenient manner, e.g., by simply by using his/her fingers to interact with the user interface 802, such as by tapping, pressing, or sliding buttons (which may be physical or logical) to input instructions, such as adjusting settings, which would then be transmitted wirelessly to the welding equipment and/or the monitoring equipment.

In some implementations, the interface device 800 is configured to obtain user input by means other than direct interaction with the interface device 800 itself. For example, the interface device 800 may incorporate one or more sensors for generating sensory information that may be interpreted and/or handled as user input. In an example implementation, the sensory information is related to movement of the arm, or whichever body part to which the interface device 800 is applied. For example, the interface device 800 may incorporate built-in movement sensors (and related circuits, if necessary), for tracking movements of the user and generating corresponding sensory information. The generated information may then be used to determine if the movement can be interpreted as user input. This may be done by comparing the sensed movements with pre-defined criteria (e.g., type and/or range of movement, repetition, etc.). Accordingly, movements by the user (e.g., user's arm) may be used as selections and inputs, with corresponding signals being then generated and communicated wirelessly (e.g., via wireless transceiver incorporated into the welding helmet 20) to the welding and/or monitoring equipment, without requiring direct interaction with the interface device 800.

In some implementations, multiple interface devices and/or different types thereof, may be utilized, to enhance operability. For example, the interface device 800 may be used in conjunction with the interface device 700, to allow the operator multiple means of providing inputs (e.g., by movement of arm rather than blinking of the eye) and to allow providing output back to the user (e.g., using the display functions of the interface device 700, as described above).

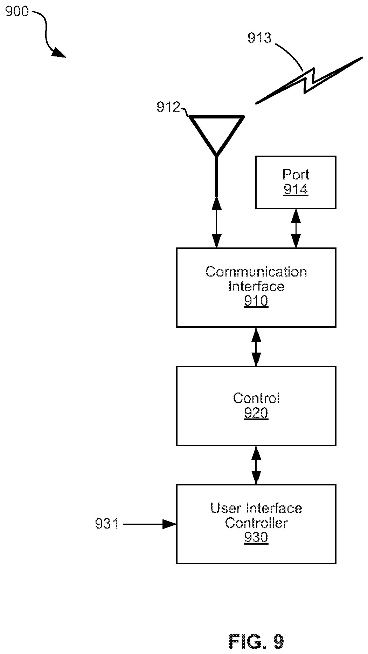

FIG. 9 shows example circuitry of an interface device for wirelessly interfacing with welding and monitoring equipment, in accordance with aspects of this disclosure. Referring to FIG. 9, there is shown circuitry of an example interface device 900. The interface device 900 may correspond to the interface device 600 of FIGs. 6A and 6B, the interface device 700 of FIG. 7, or the interface device 800 of FIG. 8.

As shown in FIG. 9, the interface device 900 may comprise a communication interface circuitry 910, a control (e.g., central processing unit (CPU)) circuity 920, and a user interface controller circuitry 930.

The communication interface circuitry 910 is operable to handle transmit and receive operations in the interface device 900. The communication interface circuitry 910 may be operable to, for example, configure, setup, and/or use wired and/or wireless connections, such as over suitable wired/wireless interface(s) and in accordance with wireless and/or wired protocols or standards supported in the device, to facilitate transmission and/or reception of signals (e.g., carrying data). In this regard, the communication interface circuitry 910 may be operable to process transmitted and/or received signals, in accordance with applicable wired or wireless interfaces/protocols/standards.

Examples of wireless interfaces/protocols/standards that may be supported and/or used by the communication interface circuitry 910 may comprise wireless personal area network (WPAN) protocols, such as Bluetooth (IEEE 802.15); near field communication (NFC) standards; wireless local area network (WLAN) protocols, such as WiFi (IEEE 802.11); cellular standards, such as 2G/2G+ (e.g., GSM/GPRS/EDGE, and IS-95 or cdmaOne) and/or 2G/2G+ (e.g., CDMA2000, UMTS, and HSPA); 4G standards, such as WiMAX (IEEE 802.16) and LTE; Ultra-Wideband (UWB); etc. Examples of wired interfaces/protocols/standards that may be supported and/or used by the communication interface circuitry 910 comprise Ethernet (IEEE 802.3), Fiber Distributed Data Interface (FDDI), Integrated Services Digital Network (ISDN), cable television and/or internet (ATSC, DVB-C, DOCSIS), Universal Serial Bus (USB) based interfaces, etc.

Examples of signal processing operations that may be performed by the electronic system 100 comprise, for example, filtering, amplification, analog-to-digital conversion and/or digital-to-analog conversion, up-conversion/down-conversion of baseband signals, encoding/decoding, encryption/decryption, modulation/demodulation, etc.

As shown in the example implementation depicted in FIG. 9, communication interface circuitry 910 may be configured to use an antenna 912 for wireless communications and a port 914 for wired communications. The antenna 912 may be any type of antenna suited for the frequencies, power levels, etc. required for wireless interfaces/protocols supported by the interface device 900. For example, the antenna 912 may particularly support WiFi and/or Bluetooth transmission/reception. The port 914 may be any type of connectors suited for the communications over wired interfaces/protocols supported by the interface device 900. For example, the port 914 may comprise an Ethernet over twisted pair port, a USB port, an HDMI port, a passive optical network (PON) port, and/or any other suitable port for interfacing with a wired or optical cable

The user interface controller circuitry 930 is operable to receive user input 931 (e.g., provided based on interaction with user interface, such as user interface 602 or 702), and to generate and/or condition (e.g., amplify, digitize, etc.) data corresponding to such input. The user input (and accordingly, the corresponding data) may be used to, for example, control and/or adjust equipment used in welding operations and/or in monitoring such operations.

The control circuitry 920 is operable to process data from various components of the interface device 900, such as the communication interface circuitry 910 and the user interface driver 930. For example, the control circuitry 920 may receive data from the user interface driver 930 corresponding to user input, and may output that data (after processing), and/or signals corresponding thereto, to the communication interface circuitry 910 for transmission thereby. The signals output to the communication interface circuitry 910 may comprise, for example, signals to control or adjust settings of equipment 12 or monitoring equipment 28. Similarly, the control circuitry 920 may receive data or signals from communication interface circuitry 910, which may be processed and used within the interface device 900. For example, data or signals received from the communication interface circuitry 910 may comprise indications (received via link 25) of present settings and/or actual measured output of the equipment 12 and/or the monitoring equipment 28.

For transmit operations, the communication interface circuitry 910 may receive data from the control circuitry 920 and packetize the data and convert the data to physical layer signals in accordance with protocols in use on the communication link 25. The data to be transmitted may comprise, for example, control signals for controlling the equipment 12. For receive operations, the communication interface may receive physical layer signals via the antenna 912 or port 914, recover data from the received physical layer signals (demodulate, decode, etc.), and provide the data to control circuitry 920. The received data may comprise, for example, indications of present settings and/or actual measured output of the equipment 12 (e.g., voltage, amperage, and/or wire speed settings and/or measurements).

The design and/or implementation of the different circuits and/or other components (e.g., antennas, ports, etc.) in the interface device 900 may vary based on the particular type of device. For example where the interface device 900 is implemented as ultra-thin wearable device (e.g., similar to the interface device 800 described in FIG. 8), the circuitry and/or related components may be designed and/or implemented as very flexible, ultra-thin built-in integrated circuits, so that may be incorporated into ultra-thin patches without compromising the wearability of the these devices.

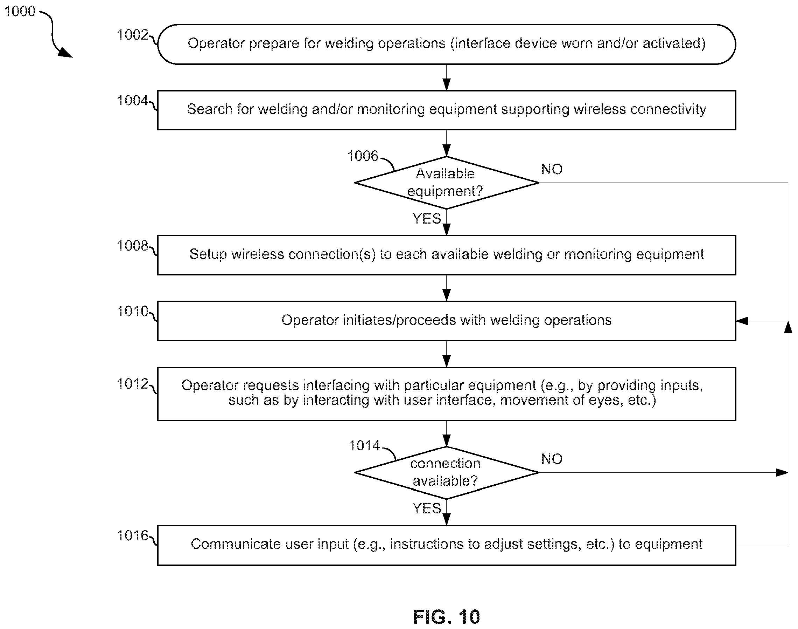

FIG. 10 is a flowchart illustrating an example process for interfacing with welding and/or monitoring equipment using wearable or integrated interface devices, in accordance with aspects of this disclosure. Shown in FIG. 10 is flow chart 1000, comprising a plurality of example steps (represented as blocks 1002-1016).

In starting step 1002, an operator (e.g., operator 18) may prepare for welding operations. The preparation may include setting up welding equipment (e.g., equipment 12), monitoring equipment (e.g., equipment 28), setting up a workpiece (e.g., workpiece 24) for the welding, etc. Further, in some instances, the preparation may include incorporating and/or activating an interface device. This may be done in different way, based on the type of interface device being used. For example, some interface devices (e.g., the interface device 600) may be worn; some interface devices (e.g., the interface device 700) may simply be integrated into the operator's clothing (e.g., helmet 20); and other interface devices (e.g., the interface device 800) may be applied (made to stick or adhere) to the body (or select articles) of the user.

In step 1004, the interface device may search for welding and/or monitoring equipment supporting wireless connectivity. The search may be configured in accordance with the particular wireless technologies used or supported by the interface device. For example, where the interface device uses Bluetooth, protocol-defined search mechanism for potential Bluetooth peers may be used.

In step 1006, it may be determined whether there were identified equipment for peering with wirelessly, particularly welding and/or monitoring equipment. In instances where no equipment is found, the process may proceed directly to step 1010; otherwise (i.e., at least one candidate peer is found), the process proceeds to step 1008.

In step 1008, the interface device sets up wireless connection(s) (e.g., WiFi, Bluetooth, NFC, etc.) to each available welding or monitoring equipment.

In step 1010, the operator initiates (or proceeds with) with welding operations.

In step 1012, the operator requests interfacing with particular equipment (e.g., by providing inputs, such as by interacting with user interface, movement of eyes, etc.).

In step 1014, it may be determined whether a connection is available to the particularly selected equipment by the operator in step 1012. In instances where no connection is available, the process may simply return to step 1010 (optionally after notifying the operations, such as via suitable means-e.g., audio, visual, etc.-that remote/wireless interfacing is not possible; otherwise (i.e., a connection is available), the process proceeds to step 1008.)

In step 1016, the user input (e.g., instructions to adjust settings, etc.) may be communicated to the equipment using wireless connection(s). The process may then return to step 1010, to continue welding operations. At any point during the process, the process may terminate when the operator terminates the welding.

The present methods and systems may be realized in hardware, software, or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it is intended that the present system not be limited to the particular implementations disclosed, but that the present system will include all implementations falling within the scope of the appended claims.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "example" means serving as a non-limiting example, instance, or illustration. As utilized herein, the terms "e.g. and for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

## Claims

1. An interface device (800, 900) configured to be worn by a user, or to be integrated into an article of clothing or equipment worn by the user, during welding operations, the interface device (800, 900) comprising:
- a user interface circuit (930) operable to receive and process user input;
- a communication circuit (910) operable to setup and use wireless connections based on one on more wireless interfaces (802); and
- a processing circuit (920) operable to manage, control, and support operations of the interface device (800, 900);
wherein the interface device (800, 900) is flexible and comprises a flexible membrane into which the user interface circuit (930), the communication circuit (910) and the processing circuit (920) are integrated,
wherein the interface device (800, 900) is configured as an ultra-thin element such that when it is applied to the user it conforms to the shape of the surface where it is applied and accommodates changes in that surface, and
wherein the interface device (800, 900) comprises a user interface (802) integrated into the flexible membrane, the user interface (802) being operable to receive the user input based on interactions by the user and comprising one or more physical or virtual elements for providing particular input by physical action applied by the user to the elements,
**characterized in that**
the interface device (800, 900) is directly applicable to the body of the user or to clothing as stick-on and peel-off or wash-off patch.

2. The interface device (800, 900) of claim 1,
wherein the user interface (802) comprises at least one multi-function component for adaptively generating or receiving different user input based on where a message is being sent.

3. The interface device (800, 900) of one of the preceding claims,
wherein the user interface circuit (930) is operable to generate the user input based on sensory information obtained from tracking particular actions of the user.

4. The interface device (800, 900) of claim 3,
wherein the interface device (800, 900) comprises one or more sensors integrated into the flexible membrane, the one or more sensor being operable to generate the sensory information.

5. The interface device (800, 900) of claim 3 or 4,
wherein the particular actions of the user comprise movements of the user or particular body part of the user.

6. A welding arrangement for use during welding operations, comprising:
- welding equipment (12) operable to enable welding;
- weld monitoring equipment (28) operable to monitor welding performed using the welding equipment (12); and
- an interface device (800, 900) as defined in one of the preceding claims,
wherein the interface device (800, 900) is operable to:
- support a first mode of operation for interfacing with the welding equipment (12) and a second mode of operation for interfacing with the weld monitoring equipment (28);
- setup a first wireless connection with the welding equipment (12) and a second wireless connection with the weld monitoring equipment (28); and
- interface with the welding equipment (12) over the first wireless connection when configured into the first mode of operation, and interface with the weld monitoring equipment (28) over the second wireless connection when configured into the second mode of operation.

7. The welding arrangement of claim 6, wherein:
- the processing circuitry (920) is operable to determine to which of the welding equipment (12) and the weld monitoring equipment (28) the user input is directed; and
- the communication circuitry (910) is operable to communicate to the determined one of the welding equipment (12) and the weld monitoring equipment (28), over a respective one of the first wireless connection and the second wireless connection, one or more messages corresponding to the user input.

8. The welding arrangement of claim 7,
wherein the processing circuitry (920) is operable to generate the one or more corresponding messages based on the user input and the respective one of the first wireless connection and the second wireless connection.

## Patentansprüche

1. Schnittstellenvorrichtung (800, 900), die dazu konfiguriert ist, während Schweißvorgängen von einem Benutzer getragen oder in einem von dem Benutzer getragenen Kleidungsstück oder einer Ausrüstung integriert zu sein, wobei die Schnittstellenvorrichtung (800, 900) Folgendes aufweist:
- eine Benutzerschnittstellenschaltung (930), die betriebsfähig ist, Benutzereingaben zu empfangen und zu verarbeiten;
- eine Kommunikationsschaltung (910), die betriebsfähig ist, Drahtlosverbindungen basierend auf einer oder mehreren Drahtlosschnittstellen (802) einzurichten und zu verwenden; und
- eine Verarbeitungsschaltung (920), die betriebsfähig ist, Operationen der Schnittstellenvorrichtung (800, 900) zu verwalten, zu steuern und zu unterstützen;
wobei die Schnittstellenvorrichtung (800, 900) flexibel ist und eine flexible Membran aufweist, in der die Benutzerschnittstellenschaltung (930), die Kommunikationsschaltung (910) und die Verarbeitungsschaltung (920) integriert sind,
wobei die Schnittstellenvorrichtung (800, 900) als ein ultradünnes Element konfiguriert ist, sodass sie, wenn sie an dem Benutzer angebracht wird, der Form der Oberfläche, auf der sie angebracht wird, entspricht und sich Veränderungen dieser Oberfläche anpasst, und
wobei die Schnittstellenvorrichtung (800, 900) eine Benutzerschnittstelle (802) aufweist, die in der flexiblen Membran integriert ist, wobei die
Benutzerschnittstelle (802) betriebsfähig ist, die Benutzereingaben basierend auf Interaktionen seitens des Benutzers zu empfangen, und ein oder mehrere physische oder virtuelle Elemente zum Bereitstellen bestimmter Eingaben durch physische Aktionen, die von dem Benutzer auf die Elemente angewendet werden, aufweist,
**dadurch gekennzeichnet, dass**
die Schnittstellenvorrichtung (800, 900) direkt auf den Körper des Benutzers oder auf Kleidung als Aufklebe- und Abzieh- oder Wegwaschflicken aufbringbar ist.

2. Schnittstellenvorrichtung (800, 900) nach Anspruch 1, wobei die Benutzerschnittstelle (802) zumindest eine Multifunktionskomponente zum adaptiven Erzeugen oder Empfangen unterschiedlicher Benutzereingaben basierend darauf, wo eine Nachricht gesendet wird, aufweist.

3. Schnittstellenvorrichtung (800, 900) nach einem der vorhergehenden Ansprüche,
wobei die Benutzerschnittstellenschaltung (930) betriebsfähig ist, die Benutzereingaben basierend auf sensorischen Informationen zu erzeugen, die mittels Verfolgung bestimmter Aktionen des Benutzers erhalten werden.

4. Schnittstellenvorrichtung (800, 900) nach Anspruch 3,
wobei die Schnittstellenvorrichtung (800, 900) einen oder mehrere Sensoren aufweist, die in die flexiblen Membran integriert sind, wobei der eine oder die mehreren Sensoren betriebsfähig sind, die sensorischen Informationen zu erzeugen.

5. Schnittstellenvorrichtung (800, 900) nach Anspruch 3 oder 4, wobei die bestimmten Aktionen des Benutzers Bewegungen des Benutzers oder eines bestimmten Körperteils des Benutzers aufweisen.

6. Schweißanordnung zur Verwendung während Schweißvorgängen, aufweisend:
- Schweißausrüstung (12), die betriebsfähig ist, ein Schweißen zu ermöglichen;
- Schweißnahtüberwachungsausrüstung (28), die betriebsfähig ist, ein unter Verwendung der Schweißausrüstung (12) durchgeführtes Schweißen zu überwachen; und
- eine Schnittstellenvorrichtung (800, 900) nach einem der vorhergehenden Ansprüche,
wobei die Schnittstellenvorrichtung (800, 900) betriebsfähig ist zum:
- Unterstützen eines ersten Betriebsmodus zur Schnittstellenbildung mit der Schweißausrüstung (12) und eines zweiten Betriebsmodus zur Schnittstellenbildung mit der Schweißnahtüberwachungsausrüstung (28);
- Einrichten einer ersten Drahtlosverbindung mit der Schweißausrüstung (12) und einer zweiten Drahtlosverbindung mit der Schweißnahtüberwachungsausrüstung (28); und
- Bilden einer Schnittstelle mit der Schweißausrüstung (12) über die erste Drahtlosverbindung bei Konfiguration in dem ersten Betriebsmodus, und Bilden einer Schnittstelle mit der Schweißnahtüberwachungsausrüstung (28) über die zweite Drahtlosverbindung bei Konfiguration in dem zweiten Betriebsmodus.

7. Schweißanordnung nach Anspruch 6, wobei:
- die Verarbeitungsschaltung (920) betriebsfähig ist, zu bestimmen, an welche von der Schweißausrüstung (12) und der Schweißnahtüberwachungsausrüstung (28) die Benutzereingabe gerichtet ist; und
- die Kommunikationsschaltung (910) betriebsfähig ist, über eine entsprechende von der ersten Drahtlosverbindung und der zweiten Drahtlosverbindung, eine oder mehrere Nachrichten, die der Benutzereingabe entsprechen, an die bestimmte von der Schweißausrüstung (12) und der Schweißnahtüberwachungsausrüstung (28) zu übermitteln.

8. Schweißanordnung nach Anspruch 7,
wobei die Verarbeitungsschaltung (920) betriebsfähig ist, die eine oder die mehreren entsprechenden Nachrichten basierend auf der Benutzereingabe und der jeweiligen einen von der ersten Drahtlosverbindung und der zweiten Drahtlosverbindung zu erzeugen.

## Revendications

1. Dispositif d'interface (800, 900) configuré pour être porté par un utilisateur, ou pour être intégré dans un article de vêtement ou d'équipement porté par l'utilisateur, durant des opérations de soudage, le dispositif d'interface (800, 900) comprenant :
- un circuit d'interface utilisateur (930) utilisable pour recevoir et traiter une entrée utilisateur ;
- un circuit de communication (910) utilisable pour établir et utiliser des connexions sans fil sur base d'une parmi plusieurs interfaces sans fil (802) ; et
- un circuit de traitement (920) utilisable pour gérer, commander et supporter des opérations du dispositif d'interface (800, 900) ;
dans lequel le dispositif d'interface (800, 900) est flexible et comprend une membrane flexible dans laquelle le circuit d'interface utilisateur (930), le circuit de communication (910) et le circuit de traitement (920) sont intégrés,
dans lequel le dispositif d'interface (800, 900) est configuré comme un élément ultra-mince de sorte que lorsqu'il est appliqué à l'utilisateur il se conforme à la forme de la surface où il est appliqué et s'adapte à des changements dans cette surface, et
dans lequel le dispositif d'interface (800, 900) comprend une interface utilisateur (802) intégrée dans la membrane flexible, l'interface utilisateur (802) étant utilisable pour recevoir l'entrée utilisateur sur base d'interactions par l'utilisateur et comprenant un ou plusieurs éléments physiques ou virtuels pour la fourniture d'une entrée particulière par une action physique appliquée par l'utilisateur aux éléments,
**caractérisé en ce que**
le dispositif d'interface (800, 900) est directement applicable au corps de l'utilisateur ou aux vêtements en tant que pièce adhésive et détachable ou détachable par lavage.

2. Dispositif d'interface (800, 900) selon la revendication 1, dans lequel l'interface utilisateur (802) comprend au moins un élément multifonction pour la génération ou la réception de manière adaptative de différentes entrées d'utilisateur sur base d'où un message est envoyé.

3. Dispositif d'interface (800, 900) selon l'une des revendications précédentes,
dans lequel le circuit d'interface utilisateur (930) est utilisable pour générer l'entrée utilisateur sur base d'informations sensorielles obtenues à partir du suivi d'actions particulières de l'utilisateur.

4. Dispositif d'interface (800, 900) selon la revendication 3, dans lequel le dispositif d'interface (800, 900) comprend un ou plusieurs capteurs intégrés dans la membrane flexible, le ou les capteurs étant utilisables pour générer les informations sensorielles.

5. Dispositif d'interface (800, 900) selon la revendication 3 ou 4,
dans lequel les actions particulières de l'utilisateur comprennent des mouvements de l'utilisateur ou une partie de corps particulière de l'utilisateur.

6. Agencement de soudage destiné à être utilisé durant des opérations de soudage, comprenant :
- un équipement de soudage (12) utilisable pour permettre le soudage ;
- l'équipement de surveillance de soudure (28) utilisable pour surveiller le soudage réalisé à l'aide de l'équipement de soudage (12) ; et
- un dispositif d'interface (800, 900) selon l'une quelconque des revendications précédentes,
dans lequel le dispositif d'interface (800, 900) est utilisable pour :
- supporter un premier mode d'utilisation pour l'interface avec l'équipement de soudage (12) et un deuxième mode d'utilisation pour l'interface avec l'équipement de surveillance de soudure (28) ;
- établir une première connexion sans fil avec l'équipement de soudage (12) et une deuxième connexion sans fil avec l'équipement de surveillance de soudure (28) ; et
- interfacer avec l'équipement de soudage (12) sur la première connexion sans fil lorsqu'elle est configurée dans le premier mode d'utilisation, et interfacer avec l'équipement de surveillance de soudure (28) sur la deuxième connexion sans fil lorsqu'elle est configurée dans le deuxième mode d'utilisation.

7. Agencement de soudage selon la revendication 6, dans lequel :
- le circuit de traitement (920) est utilisable pour déterminer vers lequel parmi l'équipement de soudage (12) et l'équipement de surveillance de soudure (28) l'entrée d'utilisateur est dirigée ; et
- le circuit de communication (910) est utilisable pour communiquer à celui déterminé parmi l'équipement de soudage (12) et l'équipement de surveillance de soudure (28), sur une respective parmi la première connexion sans fil et la deuxième connexion sans fil, un ou plusieurs messages correspondant à l'entrée utilisateur.

8. Agencement de soudage selon la revendication 7,
dans lequel le circuit de traitement (920) est utilisable pour générer le ou les messages correspondants sur base de l'entrée utilisateur et de celle respective parmi la première connexion sans fil et la deuxième connexion sans fil.
